Europäisches Patentamt

(19) European Patent Office (11) Numéro de publication: **0 080 420 B1**

Office européen des brevets

(12) **FASCICULE DE BREVET EUROPEEN**

(45) Date de publication du fascicule du brevet: (51) Int. Cl.³: **C 12 H 1/16, B 01 D 19/00**
**11.07.84**

(21) Numéro de dépôt: **82420128.9**

(22) Date de dépôt: **20.09.82**

(54) **Procédé et appareil pour le dégazage du vin.**

(30) Priorité: **24.11.81 FR 8122442**

(43) Date de publication de la demande:
**01.06.83 Bulletin 83/22**

(45) Mention de la délivrance du brevet:
**11.07.84 Bulletin 84/28**

(84) Etats contractants désignés:
**AT BE CH DE GB IT LI LU NL SE**

(56) Documents cités:
**FR - A - 2 087 286**
**GB - A - 1 395 813**
**GB - A - 1 604 165**
**US - A - 3 091 098**

(73) Titulaire: **PRODUCTEURS DISTRIBUTEURS DES VINS DU BEAUJOLAIS, lieudit "le Pont des Samsons", Quincie en Beaujolais (Rhône) (FR)**

(72) Inventeur: **Micouin, Roland, Le Bourg Saint-Lager, F-69220 Belleville (FR)**

(74) Mandataire: **Maureau, Philippe, Cabinet Germain & Maureau Le Britannia - Tour C 20, bld Eugène Déruelle, F-69003 Lyon (FR)**

ACTORUM AG

## Description

La présente invention a pour objet un procédé et un appareil pour le dégazage du vin.

Après fermentation, un vin contient un certain nombre de gaz dissous, tels que du gaz carbonique $CO_2$, de l'anhydride sulfureux $SO_2$ et de l'hydrogène sulfuré $H_2S$, ainsi que des mercaptans.

L'hydrogène sulfuré $H_2S$ et les mercaptans sont des éléments indésirables, l'anhydride sulfureux étant, pour sa part, utile car jouant un rôle d'antiferment, tandis que le gaz carbonique $CO_2$ procure, même sous de faibles concentrations, un certain picotement désagréable.

Afin d'améliorer les qualités gustatives d'un vin, il est donc souhaitable de retirer de celui-ci, après fermentation, une certaine quantité du gaz carbonique qu'il contient.

Une technique connue consiste à injecter dans le vin, jusqu'à saturation, de l'azote qui va fixer le gaz carbonique. Un inconvénient de cette technique est qu'il convient de réaliser une désorption de l'azote et du gaz carbonique pendant un temps relativement important pendant lequel le vin doit reposer.

En outre, en fonction de la qualité du vin, les quantités de gaz carbonique fixé par l'azote sont plus ou moins importantes. Il convient donc d'effectuer une mesure avant et une mesure après dégazage, de la teneur en gaz carbonique, afin, éventuellement, de réaliser une nouvelle opération de dégazage. En conséquence, il n'est pas possible de bénéficier de résultats immédiatement, puisque la mesure du taux de gaz carbonique après dégazage ne peut être faite qu'après la fin de la désorption.

Enfin, la fixation du gaz carbonique ne se fait pas dans les mêmes conditions lorsque la température varie, l'efficacité du dégazage étant réduite pour des températures comprises entre 12 et 14°C.

La présente invention vise à pallier les inconvénients de la technique existante.

A cet effet, le procédé qu'elle concerne consiste à disperser le vin sous forme de gouttelettes à l'intérieur d'une enceinte mise en dépression.

Au cours de la chute des gouttelettes à l'intérieur de l'enceinte, la dépression régnant dans celle-ci assure la fixation de gaz carbonique, cette fixation étant élevée en raison de la surface d'échange importante entre chaque gouttelette et le milieu extérieur.

Avantageusement, les gouttelettes tombent à la surface d'un certain volume de vin. Ceci est intéressant car provoquant l'éclatement des gouttelettes lors de l'impact sur la surface du vin, et favorisant leur échange avec le milieu extérieur qui parfait le dégagement du gaz carbonique.

L'intérêt de cette technique est qu'elle permet de travailler en continu, l'échappement de gaz carbonique étant immédiat, et la mesure d'un nouveau taux en gaz carbonique en vue d'un éventuel nouveau traitement étant réalisée immédiatement.

Ce procédé est doux pour le vin, c'est-à-dire que celui-ci ne subit aucune agitation ou mouvement pouvant le perturber. Les risques d'oxydation du vin sont inexistants puisque le travail se fait en dépression.

Enfin, il n'y a pas de dénaturation du vin, ni de modification du degré alcoolique, les vins, au cours de l'opération de dégazage, n'étant pas plus affectés que par un simple soutirage.

Il est possible, au cours de ce traitement, de diminuer la teneur en gaz carbonique du vin d'à peu près 50%. Ce traitement provoquant également l'élimination d'autres éléments, tels que anhydride sulfureux, il peut être souhaitable, préalablement au traitement, de sulfiter le vin, c'est-à-dire de lui ajouter de l'anhydride sulfureux $SO_2$, afin de compenser la quantité d'anhydride qui risque d'être dégagée.

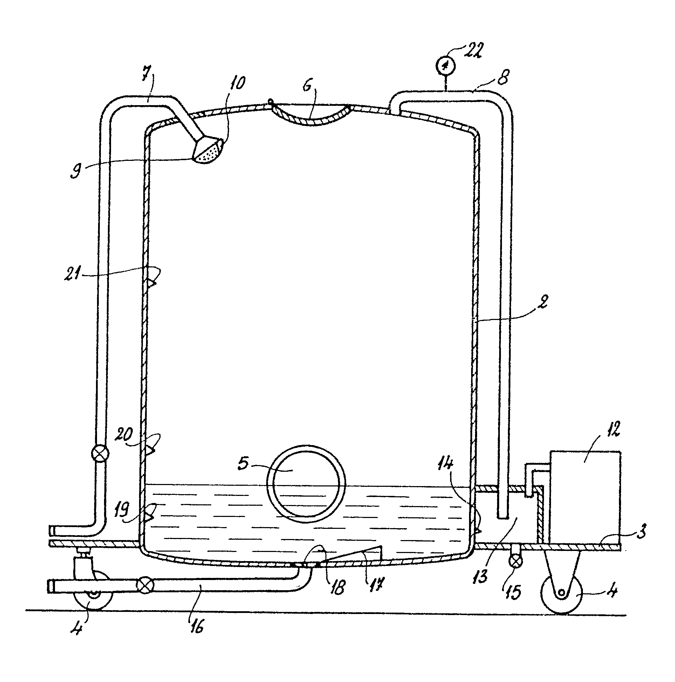

De toute façon, l'invention sera bien comprise à l'aide de la description qui suit en référence au dessin schématique annexé dont la figure unique représente, vu en coupe longitudinale, un appareil pour la mise en œuvre de ce procédé.

L'appareil représenté au dessin comprend une cuve cylindrique 2 réalisée en acier inoxydable, montée sur un socle 3 reposant lui-même sur le sol par l'intermédiaire de quatre roues 4 dont deux sont orientables. Dans cette cuve sont ménagés, dans la face latérale à proximité du fond, un hublot 5 destiné à surveiller le niveau de vin à l'intérieur de la cuve, et débouchant dans la face supérieure une trappe 6 de visite permettant également d'effectuer le nettoyage de la cuve après utilisation.

Dans la face supérieure de la cuve débouchent deux tubulures, à savoir une tubulure 7 d'amenée du vin et une tubulure 8 destinée à assurer la mise en dépression de l'intérieur de la cuve. Les tubulures 7 et 8 sont sensiblement diamétralement opposées.

A l'extrémité de la tubulure 7 est placé un embout 9 de dispersion destiné à amener le vin sous forme de fines gouttelettes. La partie de l'embout 9 située en regard de la tubulure 8 présente une zone d'occultation 10, évitant que des gouttelettes soient projetées vers la tubulure 8 et aspirées par cette dernière.

La tubulure 8 est reliée à une pompe à vide 12 par l'intermédiaire d'un piège à liquide 13 dans lequel est monté un détecteur de niveau 14, ce piège à liquide pouvant être vidé du liquide qu'il peut, éventuellement, être amené à contenir par une vanne 15 située à son extrémité inférieure. Dans le fond de la cuve 2 débouche une tubulure 16 de sortie du vin, la cuve étant équipée d'un dispositif antivortex constitué notamment par une lame radiale 17 et par un croisillon 18.

Sur les tubulures, respectivement 7 et 16, sont montées deux pompes de circulation du vin non représentées au dessin. Il est à noter que le débit de la pompe d'amenée du vin, c'est-à-dire celle montée sur la tubulure 7, est inférieur au débit de la pompe montée sur la tubulure 16. A l'intérieur de la cuve sont prévus trois détecteurs de niveau, respectivement, de bas en haut, 19, 20 et 21. Le niveau normal de liquide est situé en regard du hublot 5 et compris entre les détecteurs 19 et 20. Lors de l'opération de dégazage du vin, la pompe d'amenée de vin fonctionnant en continu, la commande de la pompe montée sur la tubulure de sortie 16 est réalisée par les détecteurs 19 et 20. Lorsque les deux pompes fonctionnant, le niveau de vin atteint le détecteur bas 19, ce dernier commande l'arrêt de la pompe montée sur la tubulure de sortie 16. Cet arrêt provoque une montée du niveau du vin à l'intérieur de la cuve jusqu'à ce que celui-ci arrive au détecteur 20, qui commande alors la mise en marche de la pompe montée sur la tubulure de sortie 16.

Dans le cas où le détecteur 20 serait défaillant et ne commanderait pas la mise en route de la pompe montée sur la tubulure de sortie 16, le niveau de vin va monter jusqu'au détecteur 21 dans un premier temps, va provoquer un signal lumineux indiquant à l'opérateur le défaut de fonctionnement, puis si celui-ci ne réagit pas, va provoquer l'arrêt de la pompe montée sur la tubulure d'entrée 7.

Dans la mesure où le détecteur 21 ne fonctionnerait pas correctement, la cuve va se remplir entièrement de vin et celui-ci va déborder dans le piège à liquide, et le détecteur 14 monté à l'intérieur de ce dernier va provoquer l'arrêt de la pompe montée sur la tubulure d'amenée de vin.

Ce dispositif comporte également une capsule manométrique 22 montée sur la tubulure 8 de mise en dépression de la cuve, qui provoque la mise en route d'un système d'alarme si la valeur de la dépression dans la cuve est trop importante. En règle générale, la dépression normale de dégazage à l'intérieur de la cuve est de l'ordre de 0,35 bar.

Comme il ressort de ce qui précède, l'invention apporte une grande amélioration à la technique existante en fournissant un procédé et un dispositif de conception simple, et extrêmement efficace car ne dénaturant en aucun cas le vin, et assurant un dégazage immédiat de celui-ci.

Comme il va de soi, l'invention ne se limite pas à la seule forme d'exécution de l'appareil pour le dégazage de vin, décrite ci-dessus à titre d'exemple; elle en embrasse, au contraire, toutes les variantes de réalisation. C'est ainsi notamment que la forme de la cuve pourrait être différente, non pas cylindrique, mais par exemple parallélépipèdique ou en forme de tronc de pyramide, sans que l'on sorte pour autant du cadre de l'invention, l'essentiel étant que la distance de chute des gouttelettes soit suffisante pour procurer une bonne absorption du gaz carbonique.

**Revendications**

1. Procédé de dégazage du vin, caractérisé en ce qu'il consiste à disperser le vin sous forme de gouttelettes à l'intérieur d'une enceinte mise en dépression.

2. Procédé selon la revendication 1, caractérisé en ce qu'il consiste à faire tomber les gouttelettes de vin à la surface d'un certain volume de vin.

3. Appareil pour la mise en œuvre du procédé selon l'une quelconque des revendications 1 et 2, caractérisé en ce qu'il comprend une cuve (2) réalisée en acier inoxydable, dans la paroi supérieure de laquelle débouchent deux tubulures, dont l'une (7) sert à l'amenée de vin et est équipée d'un embout de diffusion (9), et dont l'autre (8) est reliée à une pompe à vide (12), et dans la paroi inférieure de laquelle débouche une tubulure (16) d'évacuation du vin.

4. Appareil selon la revendication 3, caractérisé en ce que la zone (10) de l'embout de diffusion (9) tournée du côté de la tubulure assurant la mise en dépression de l'enceinte, est occultée.

5. Appareil selon l'une quelconque des revendications 3 et 4, caractérisé en ce qu'il comprend deux pompes de circulation du vin placées, respectivement, sur la tubulure (7) d'amenée du vin à la cuve et sur la tubulure (16) d'évacuation du vin hors de la cuve, la pompe d'évacuation ayant un débit supérieur à celle de la pompe d'amenée, deux détecteurs de niveau étant prévus à proximité du fond de la cuve, dont celui (19) situé le plus bas commande l'arrêt du fonctionnement de la pompe de sortie, et dont celui (20) situé le plus haut commande la mise en route de celle-ci.

6. Appareil selon la revendication 5, caractérisé en ce qu'il comprend un détecteur de niveau (21) qui, situé au-dessus des détecteurs (19, 20) de régulation de niveau, commande, lorsque le niveau du vin l'atteint, le déclenchement d'un système d'alarme sonore ou visuel, puis après temporisation, l'arrêt de la pompe d'amenée de vin.

7. Appareil selon la revendication 6, caractérisé en ce qu'il comprend un piège à liquide (13) disposé entre la tubulure (8) mettant la cuve en dépression et la pompe à vide (12) qui lui est associée, à l'intérieur duquel est monté un détecteur de niveau (14) commandant l'arrêt de la pompe d'entrée, quand une certaine quantité de vin a pénétré dans le piège.

8. Appareil selon l'une quelconque des revendications 3 à 7, caractérisé en ce qu'il comprend, à l'intérieur de la tubulure (8) de mise en dépression de la cuve, une capsule manométrique (22) déclenchant un signal d'alarme, lorsque l'intensité de la dépression atteint une valeur prédéterminée.

**Patentansprüche**

1. Verfahren zum Entgasen von Wein, dadurch gekennzeichnet, dass der Wein in Tröpfchen verteilt in einen unter Unterdruck stehenden Raum eingebracht wird.

2. Verfahren nach Anspruch 1, dadurch gekennzeichnet, dass die Weintröpfchen auf die Oberfläche eines bestimmten Weinvolumens fallengelassen werden.

3. Einrichtung zur Durchführung des Verfahrens nach einem der Ansprüche 1 oder 2, dadurch gekennzeichnet,

– dass ein Behälter (2) aus rostfreiem Stahl vorgesehen ist,

– dass in den oberen Wandbereich des Behälters (2) zwei Leitungen münden, wobei eine Leitung (7) zum Zuführen des Weins dient und mit einem Verteilermundstück (9) versehen ist, und die andere Leitung (8) an eine Unterdruckpumpe (12) angeschlossen ist,

– und dass in den unteren Wandbereich eine Leitung (16) zum Abführen des Weins vorgesehen ist.

4. Einrichtung nach Anspruch 3, dadurch gekennzeichnet, dass der Bereich (10) des Verteilermundstückes (9), welcher der zur Erzeugung des Unterdruckes dienenden Leitung (8) zugewandt ist, abgedeckt ist.

5. Einrichtung nach Anspruch 3 oder 4, dadurch gekennzeichnet,

– dass zwei Pumpen für die Umwälzung des Weines vorgesehen sind, wovon die eine in der Leitung (7) für die Zuführung des Weines in den Behälter (2) und die andere in der Leitung (16) für die Abführung des Weines aus dem Behälter angeordnet ist, wobei die Fördermenge der Abführpumpe grösser ist als die Fördermenge der Zuführpumpe,

– dass in der Nähe des Bodens des Behälters (2) zwei Niveaudetektoren vorgesehen sind, wovon der tiefergelegene Niveaudetektor (19) zum Abschalten der Abführpumpe dient und der höhergelegene Niveaudetektor (20) zum Einschalten derselben dient.

6. Einrichtung nach Anspruch 5, dadurch gekennzeichnet, dass oberhalb der Niveaudetektoren (19, 20) zur Regelung des Niveaus ein weiterer Niveaudetektor (21) vorgesehen ist, welcher bei einem Niveauanstieg auf dessen Höhe die Auslösung eines akustischen oder visuellen Alarmsystems und nach einem bestimmten Zeitablauf die Abschaltung der Pumpe zum Zuführen des Weines steuert.

7. Einrichtung nach Anspruch 6, dadurch gekennzeichnet, dass zwischen der Leitung (8) zur Unterdruckversorgung des Behälters (2) und der dieser zugeordneten Unterdruckpumpe (12) ein Flüssigkeits-Auffangbehälter (13) angeordnet ist, innerhalb dessen ein Niveaudetektor (14) vorgesehen ist, welcher zum Abschalten der Zuführpumpe nach dem Eintritt einer bestimmten Weinmenge in den Auffangbehälter (13) dient.

8. Einrichtung nach einem der Ansprüche 3 bis 7, dadurch gekennzeichnet, dass innerhalb der Leitung (8) zur Unterdruckversorgung des Behälters (2) ein Druckmessgerät (22) vorgesehen ist, welches ein Alarmsignal auslöst, wenn die Grösse des Unterdruckes einen vorbestimmten Wert erreicht.

**Claims**

1. Process for the removal of gas from wine characterised in that it includes dispersing the wine in the form of small drops on the inside of a wall at a low pressure.

2. Process according to claim 1, characterised in that it includes making the small drops of wine fall on to the surface of a certain volume of wine.

3. Apparatus for carrying out the process in accordance with one or other of claims 1 and 2, characterised in that it includes a vat (2) made of stainless steel, from the upper inner surface of which two pipes lead out, one of which (7) is used to supply the wine and is fitted with a spray at its tip (9), the other pipe (8) is joined to a pump for emptying (12) and a pipe (16) for discharging the wine leading from the lower wall of the vat.

4. Apparatus in accordance with claim 3 characterised in that the area (10) of the spray at the tip (9) which is turned from the side of the pipe to ensure the lowering of the pressure in the enclosed space, is hidden.

5. Apparatus in accordance with one or other of claims 3 and 4, characterised in that it includes two pumps for circulating the wine situated, respectively, on the pipe (7) for bringing the wine in to the vat and on the pipe (16) for discharging the wine from the vat, the discharge pump having a flow greater than that of the supply pump, two level detectors being provided in the region of the bottom of the vat, of which the lower level detector (19) controls the stoppage of the outlet pump and the upper level detector (20) controls the starting up of the outlet pump.

6. Apparatus in accordance with claim 5, characterised in that it includes a level detector (21) which, situated above the detectors (19, 20) for regulating the level, operates, when the level of the wine reaches it, the activation of an audible or visual alarm system, then after a calculated delay it stops the pump for supplying the wine.

7. Apparatus in accordance with claim 6, characterised in that it includes a trap for liquid (13) arranged between the pipe (8) which lowers the pressure in the vat and the pump for emptying (12) which is linked to it, inside which trap for liquid is mounted a level detector (14) controlling the stopping of the inlet pump when a certain amount of wine has entered into the trap.

8. Apparatus in accordance with one or other of the claims 3 to 7 characterised in that it includes on the inside of the pipe (8) for lowering the pressure of the vat, a pressure gauge (22) which sets off an alarm signal when the amount of the pressure reaches a predetermined value.